# EUROPEAN PATENT APPLICATION

(11) **EP 2 256 356 A2**
(43) Date of publication of application: **01.12.2010**
(21) Application number: 10002796.0
(22) Date of filing: 17.03.2010
(51) Int. Cl.: F16B 45/02

(54) **Anti-wear karabiner**

(30) Priority: 27.05.2009 IT MI20090177
(71) Applicant: ALUDESIGN S.p.A., 24034 Cisano Bergamasco BG (IT)
(72) Inventor: Paglioli, Carlo, 24034 Cisano Bergamasco (BG) (IT)
(74) Representative: Marietti, Giuseppe

(57) **Abstract**

The present invention relates to a karabiner provided with at least one element (1) protecting from wear to which karabiner is subject because of friction caused by rubbing with at least one of the bodies it is coupled therewith.

## Description

### FIELD OF THE INVENTION

The present invention relates to a karabiner having improved performances at surfaces contacting with bodies coupled therewith, and for this reason subjected to wear.

### KNOWN PRIOR ART

Karabiners of the known art are made from a variety of materials and provided with several safety devices. Contact between coupling bodies, such as for example stiff bodies or more often ropes, may easily generate wear at contact surfaces with the karabiner.

Thus, the afore said conventional karabiners experience wear limiting the proper operation and / or safety with time even when they are not subjected to particularly heavy loads.

In fact, in many applications where load reduction as well as particular robustness features play important role, such as for example in alpinism, karabiners are composed of aluminium or other lightweight materials which however typically show a very limited wear resistance relatively to other materials.

Thus, it is an object of the present invention to overcome such afore said drawback of karabiners of the known art and to provide a next level of improvement for conventional karabiners by improving their wear resistance thereby providing significant advantages in terms of increased lifetime of karabiners with relevant economic and time benefits due to replacements.

### BRIEF DESCRIPTION OF THE DRAWINGS

For purposes of illustration only, and thence not to be considered as limiting the scope of the invention, two embodiments of the present invention are represented with reference to the accompanying figures:
Figure 1: is a partial and operational side view of the karabiner according to one possible embodiment of the present invention wherein an auxiliary element 1 is fixedly coupled to the karabiner body;
Figure 2: is a partial and operational side view of the karabiner according to one possible embodiment of the present invention wherein an auxiliary element 1 is fixedly coupled to the karabiner body;

### DETAILED DESCRIPTION OF AN EMBODIMENT OF THE PRESENT INVENTION.

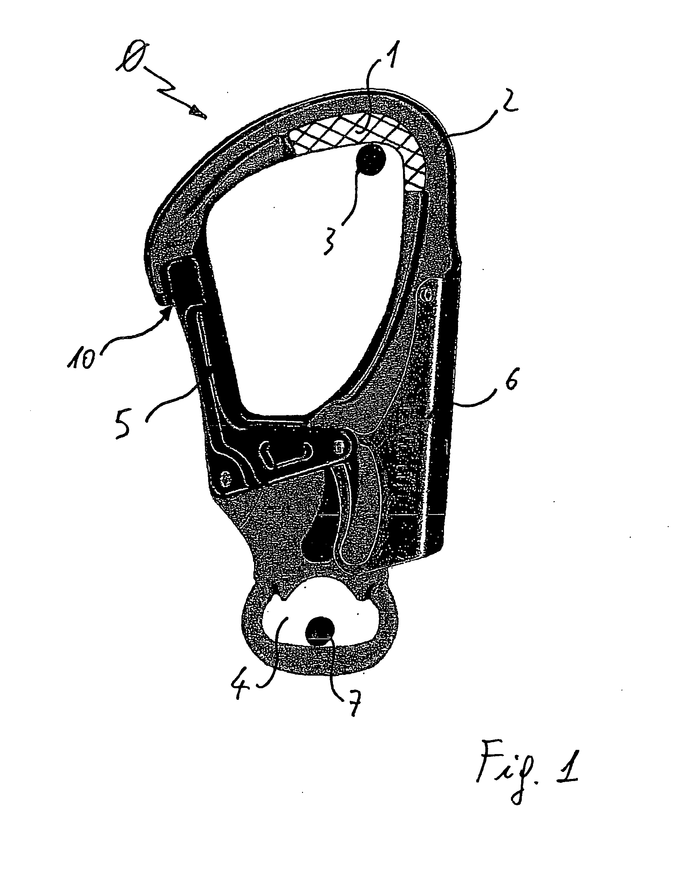

Figure 1 represents a possible embodiment of a karabiner 0 according to the features of the present invention.

As shown, in the present embodiment, the karabiner 0 is composed of a main body 2 forming a closed path, a hole 4 hosting the body restraining the karabiner, hereinafter referred as coupling body 7 and typically in the form of a rope, especially in professional environment such as building industry, or nautical field, alpinism, etc.

The karabiner is also provided with a spout 10 and any possible closing device 5 is itself provided with a safety device 6 adapted to prevent its accidental opening.

The purpose of karabiners, as known from the prior art, is to join the coupling body 7 to a second body hereinafter referred as coupled body 3.

The coupled body 3 can be of a variety of types, and often it comprises at least one rope.

A case of particular importance for the purposes of the present invention comprises using a steel wire rope as coupled body for aluminium karabiners.

In this case in fact the problem of wear has a particular importance since the average lifetime of the karabiner could be significantly shortened if compared with the average lifetime of the material which the coupled body is made from, such as for example synthetic material or natural fibres.

In fact in many applications, where the load reduction together with high robustness features, are very important, the karabiners typically are often made from aluminium, the latter however not having high wear resistance mechanical properties if compared with common steels, even if stainless.

In many applications such as in the nautical field, or alpinism, or building industry, the lightness of the karabiner is important for the user together with using conditions somewhat hard especially for the wear conditions the karabiner is subject to, due to considerable stresses and rubbing exerted on the karabiner by the coupled body 3.

This phenomenon is emphasized when, for example, the rope ends forming the coupled body 3 are covered with high friction non - slip band, or are even, as described above, formed from steel wire rope.

In these cases, mentioned as an example, the wear and using conditions, which the karabiner is subject to, are particularly hard.

For such reasons, the present invention provides at least one auxiliary element 1 arranged at least partially at the contact surface between the karabiner and the coupled body 3.

In this manner the contact surface with the coupled body 3 is now totally or partially included onto the auxiliary element 1 that becomes the body subjected to wear in the place of the karabiner main body.

The karabiners of the known art are already provided with high stress resistance features, but not always have the same high wear resistance, as aluminium karabiners, so that the auxiliary element 1 is made of a specific wear resistant material in order to protect the main body 2 from contacting at least one coupled body 3.

The features of the auxiliary element 1 surface and the features of its contact coupled body 3, determine the wear degree of both the auxiliary element 1 as well as the coupled body 3.

According to the priority decided during the designing process it is possible to select materials helping the wear resistance of mostly the auxiliary element 1 or the coupled body 3, rendering the friction with the latter as small as possible.

In fact the auxiliary element 1 could also be realized from a high friction material, however not easily subject to wear due to the coupled body 3, such as for example not polished cast iron, which would increase karabiner lifetime, though against the coupled body 3 typically comprising ropes which sometimes are very refined and expensive.

One of the possible embodiments may also provide that the afore said at least one auxiliary element 1 is replaceable when it is worn out.

The way how the auxiliary element 1 is coupled to the body 2 of the karabiner 0, as described above, could include its removal as it is worn out, thereby preserving the integrity of the rest of the karabiner.

The coupling of the auxiliary element 1 to the body 2 of the karabiner may occur both directly and indirectly through interposition of at least one more body. Such interposed body could have different functions, such as for example, deadening of vibrations coming from the coupled body and transmitted to the coupling body, providing a resilient connection element having a tearing - proof function in cases wherein the stresses from the coupled body could cause undeliverable effects, etc.

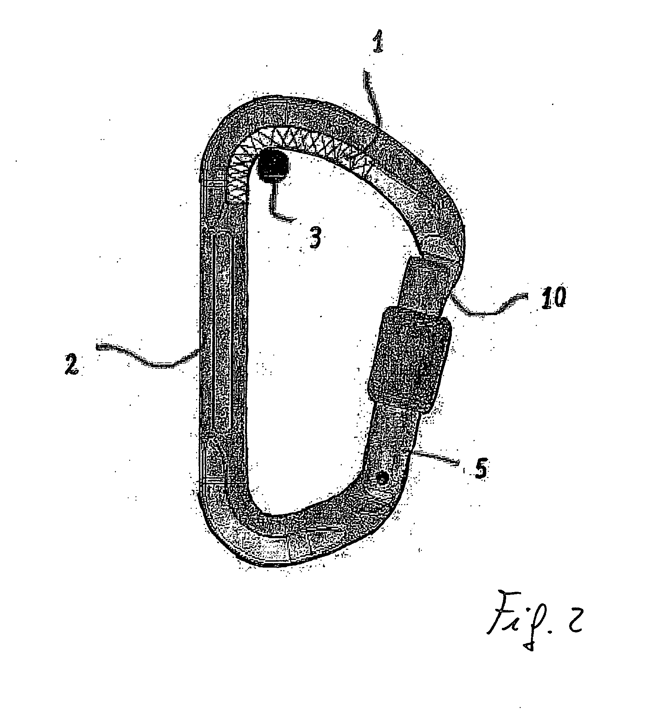

A second embodiment of the present invention is described in figure 2, where the auxiliary body 1 is coupled to the main body in the same manner described in figure 1. In figure 2 the embodiment of the present invention is based on a karabiner having a shape widely used for karabiners of the known art.

In addition to the auxiliary body 1, mounted on the main body 2, it is possible to distinguish the spout 10 for introducing the coupled body 3 therein, and the closing device 5.

Thus, as it can be seen, the present invention is applicable without any significant modification to the majority of karabiners of the know art thereby allowing the achievement of the above advantages without changing the normal use for the user.

## Claims

1. Karabiner of the type comprising a main body (2) shaped according to a close path and provided with a spout (10) where at least one coupled body (3) is inserted, said main body (2) comprising at least one surface contacting said at least one coupled body (3), **characterized by** comprising at least one auxiliary element (1) protecting from wear directly or indirectly coupled to said main body in proximity of at least part of said contact surface.

2. Karabiner according to claim 1 **characterized in that** said auxiliary element (1) is integrally coupled to said main body.

3. Karabiner according to claim 1 or 2 **characterized in that** said auxiliary element (1) is coupled to said main body (2) by a second body interposition.

4. Karabiner according to claim 1 or 2 or 3 **characterized in that** said auxiliary element (1) is composed of a wear - resistant material.

5. Karabiner according to claim 1 or 2 or 3 or 4 **characterized in that** said auxiliary element (1) is replaceable.
